# EUROPÄISCHE PATENTSCHRIFT

(11) **EP 1 081 528 B1**
(45) Veröffentlichungstag und Bekanntmachung des Hinweises auf die Patenterteilung: **22.10.2003**
(21) Anmeldenummer: 00117353.3
(22) Anmeldetag: 22.08.2000
(51) Int. Cl.: G02B 26/08

(54) **Kippbarer Mikrospiegel und Verfahren zur Herstellung**
Pivotable micromirror and process of manufacturing
Micro-miroir pivotable et procédé de fabrication

(30) Priorität: 31.08.1999 DE 19941363
(43) Veröffentlichungstag der Anmeldung: 07.03.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: Hofmann, Ulrich, Dipl.-Phys., 25524 Itzehoe (DE); Witt, Martin, Dipl.-Ing., 24809 Nübbel (DE); Wagner, Bernd, Dr. Dipl.-Phys., 25582 Looft (DE); Mühlmann, Sascha, Dipl.-Ing., 25588 Oldendorf (DE)
(74) Vertreter: Gagel, Roland, Dr.

(56) Entgegenhaltungen:
- EP-A- 0 650 133
- WO-A-99/00990
- DE-A- 19 800 745
- US-A- 5 910 856
- US-A- 5 982 521
- UENISHI Y ET AL: "TUNABLE LASER DIODE USING A NICKEL MICROMACHINED EXTERNAL MIRROR" ELECTRONICS LETTERS,GB,IEE STEVENAGE, Bd. 32, Nr. 13, 20. Juni 1996 (1996-06-20), Seiten 1207-1208, XP000599194 ISSN: 0013-5194
- MILLER R A ET AL: "MICROMACHINED ELECTROMAGNETIC SCANNING MIRRORS" OPTICAL ENGINEERING,US,SOC. OF PHOTO-OPTICAL INSTRUMENTATION ENGINEERS. BELLINGHAM, Bd. 36, Nr. 5, 1. Mai 1997 (1997-05-01), Seiten 1399-1407, XP000692371 ISSN: 0091-3286

## Beschreibung

Die vorliegende Erfindung betrifft ein Mikroaktorbauteil mit einem kippbaren plattenförmigen Aktorelement, das in einer Ausnehmung eines Trägersubstrates angeordnet, von einem offenen oder geschlossenen metallischen Rahmen auf der Oberfläche des Trägersubstrates umgeben und über ein oder mehrere Biege- und/oder Torsionselemente am Trägersubstrat aufgehängt ist, wobei die ein oder mehreren Biege- und/oder Torsionselemente aus einem elastischen Metall gebildet und am metallischen Rahmen befestigt sind, sowie ein Verfahren zur Herstellung des Mikroaktorbauteils. Das Mikroaktorbauteil ist insbesondere für den Einsatz in einem Mikrospiegelscanner geeignet.

Hauptanwendungsgebiete des vorliegenden Mikroaktorbauteils liegen im Bereich der optischen Messtechnik, der optischen Bildverarbeitung und Bilderkennung sowie der Bearbeitung mit Laserstrahlen. In zahlreichen optischen Geräten kommen hierbei Strahlablenksysteme zur Bewegung eines eintreffenden oder eines rückreflektierten Strahles über eine ausgedehnte Objektoberfläche zum Einsatz. In Abhängigkeit von der jeweiligen Anwendung werden an die Strahlablenkeinheit ganz unterschiedliche Anforderungen hinsichtlich des Ablenkwinkels, der Ablenkfrequenz, der Linearität usw. gestellt. Bewegliche Spiegelelemente sind in diesen Bereichen besonders vielseitig einsetzbar, da sie in weiten Bereichen unabhängig von der Intensität, der Wellenlänge, der Kohärenz und der Polarisation des Lichtes die Strahlablenkung durchführen können.

Für eine eng begrenzte Anwendung der pixelorientierten Bildverarbeitung sind aus der EP 0 332 953 A2 Mikrospiegelsysteme in Siliziumtechnologie bekannt. Die Mikrospiegel dieser in Form eines Arrays angeordneten Mikrospiegelsysteme haben laterale Abmessungen von etwa 10 bis 16 µm und sind an metallischen Biege- oder Torsionselementen mit einer Länge von etwa 5 µm aufgehängt. Die Spiegel werden zusammen mit der darunter liegenden Elektronik mit einem um Oberflächenmikromechanikschritte erweiterten CMOS-Prozess (CMOS = complementary metal-oxide semiconductor) hergestellt. Hierzu werden dünne metallische Schichten aus Aluminium oder einer Aluminiumlegierung mit einem Sputterverfahren auf der Oberfläche eines Siliziumsubstrates abgeschieden und zur Bildung der metallischen Spiegelelemente und metallischer Biege- oder Torsionselemente strukturiert. Mit dieser Technik lassen sich jedoch nur dünne Schichten mit einer typischen Dicke von bis zu maximal etwa 2 µm strukturieren. Die zur Verfügung stehende Schichtdicke bestimmt zusammen mit dem zu erzielenden Kippwinkel der Elemente die maximale laterale Spiegelabmessung. Für den Fall der Herstellung derartiger Mikrospiegel sind deren laterale Abmessungen auf eine Kantenlänge von etwa 16 x 16 µm beschränkt. Diese geringe Spiegelgröße ist für die in der Druckschrift beabsichtigte Anwendung als räumlicher Lichtmodulator ausreichend, bei der eine pixelorientierte digitale Lichtmodulation von räumlich und zeitlich sehr inkohärentem Licht durchgeführt wird.

Ein Einsatz dieser bekannten Mikrospiegel zur kontinuierlichen Strahlablenkung von Laserlicht ist bereits aufgrund der dabei auftretenden Beugungseffekte nicht geeignet. Hierfür werden Spiegelplatten benötigt, die mindestens die gleiche laterale Dimension wie der einfallende Lichtstrahl, in der Regel also Kantenlängen im mm-Bereich aufweisen. Derartig große Spiegelplatten lassen sich mit der Technik der EP 0 332 953 A2 nicht herstellen.

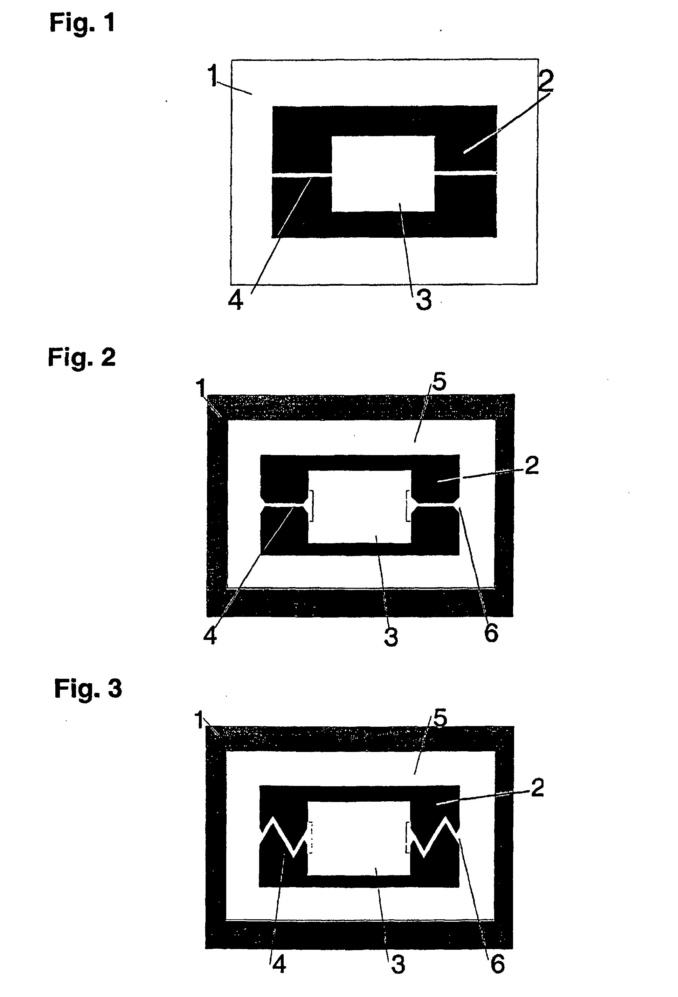

Mikroaktorbauteile der Mikrospiegelscanner für kontinuierliche Strahlablenkaufgaben werden daher meist aus dem massiven Siliziumwafer herausgeätzt. Diese Technik ist auch unter der Bezeichnung Volumen-Mikrobearbeitung (Bulk-Silizium-Mikromechanik) bekannt. Die bis zu einigen mm große Spiegelplatte kann bei dieser Technik einseitig durch einen Biegebalken aufgehängt oder auch zweiseitig durch zwei tordierbare Balken beweglich eingespannt sein. Ein Beispiel für eine derartige Anordnung ist aus Fig. 1 ersichtlich. Mikroscanner aus derartigen Mikroaktorbauteilen reduzieren die Gesamtabmessungen eines ein- oder zweiachsigen Strahlablenksystems im Vergleich zu bisher eingesetzten Galvanometerscannern bei vergleichbaren optomechanischen Eigenschaften auf wenige mm. Die bewegte Masse ist deutlich kleiner, so dass auch die Leistungsaufnahme viel geringer ist. Die eingesetzten mikrotechnischen Herstellungsverfahren basierend auf der Siliziumtechnologie ermöglichen außerdem eine kostengünstige Massenproduktion dieser Mikroscanner. Als Antriebe der Spiegelplatten werden thermomechanische, piezoelektrische, elektromagnetische und elektrostatische Kräfte genutzt.

Ein elektrostatischer Mikroaktor, der elektrostatische Kräfte zum Antrieb einsetzt, ist beispielsweise in J. Markert et al., "Elektrostatischer Mikroaktor", VDI-Berichte Nr. 960, Seiten 149 bis 178 (1992), beschrieben. Das dort eingesetzte Mikroaktorbauteil besteht aus einem Trägersubstrat aus Silizium mit einer Ausnehmung, in der eine Siliziumplatte über zwei Torsionsbänder aufgehängt ist. Die Torsionsbänder bestehen ebenfalls aus Silizium und werden zusammen mit der kippbaren Siliziumplatte aus dem Trägersubstrat herausgeätzt. Sie besitzen daher auch die gleiche Dicke wie die Siliziumplatte. Zur Bereitstellung eines funktionsfähigen Mikroaktors wird dieses Mikroaktorbauteil schließlich auf eine Grundplatte mit Elektroden aufgebracht, die unter der Siliziumplatte angeordnet sind. Die Siliziumplatte stellt dabei eine gemeinsame Kondensatorplatte dar, die mit den wenigstens zwei Elektroden einen Mehrfachkondensator bildet. Ein angelegtes elektrisches Feld zwischen der Platte und den Elektroden führt zu Kraftwirkungen und folglich zu einer Verkippung bzw. Verdrehung der Siliziumplatte um die Torsionsachse.

Ein Mikrospiegelsystem, das ein elektromagnetisches Antriebssystem einsetzt, ist aus R.A. Miller et al., Electromagnetic MEMS Scanning Mirrors For Holographic Data Storage", Solid-State Sensor and Actuator Workshop Hilton Head Island (1996), Seiten 183-186, bekannt. Bei diesem System ist auf der Spiegelplatte aus Silizium eine Kupferspule angeordnet, die über eine auf dem Biegebalken verlaufende Kupferschicht elektrisch kontaktierbar ist. Die Spiegelplatte ist weiterhin mit einer dünnen Nickel-Eisen-Legierungsschicht versehen, um die magnetischen Eigenschaften zu erzeugen. Auch bei diesem Mikroaktorbauteil werden die Spiegelplatte und die Biegebalken aus dem Siliziumsubstrat herausgeätzt. Die Kupferspule wird galvanisch auf der Oberfläche der Spiegelplatte erzeugt.

Ein wesentlicher Nachteil der beiden letztgenannten Mikroaktorbauteile besteht jedoch darin, dass sie nur ungenügend vibrations- bzw. schockbelastbar sind. Aufgrund der Größe der Spiegelplatten wirken hier wesentlich größere Kräfte als bei den sehr kleinen Mikrospiegelsystemen zur pixelorientierten Lichtmodulation. Da Silizium ein sprödes Material darstellt, kommt es bei Vibrationen oder bei Stoßeinwirkung auf diese Systeme sehr leicht zu einem Brechen der Biege - oder Torsionselemente. Andererseits bieten Spiegelplatten aus poliertem einkristallinem Silizium jedoch die Vorteile sehr geringer Rauigkeit, hoher Verwindungssteifigkeit schon bei geringen Dicken und eines geringen spezifischen Gewichtes.

Die aufgrund der - im Vergleich zu Galvanometerscannern - beabsichtigten, geringen Baugröße zur Verfügung stehenden Antriebskräfte sind relativ gering, so dass die Aufhängungen entsprechend nachgiebig sein müssen, um ausreichend große Kippwinkel der Spiegel zu erzeugen. Dies lässt sich nur durch sehr lange und dünne Torsionsbändchen bzw. Biegebändchen erzielen. So werden bei dem oben dargestellten Mikrospiegelsystem von J. Markert et al. Torsionsbänder mit einer Dicke von 30 µm und einer Länge von 1,3 mm eingesetzt. Die erforderliche Nachgiebigkeit dieser Siliziumtorsionsbänder führt jedoch zu einer extrem leichten Zerbrechlichkeit, die sich bereits bei der Herstellung derartiger Systeme bemerkbar macht, so dass die Fertigungsausbeute entsprechend gering ausfällt. Dies liegt zum einen am nasschemischen Ätzprozess bei der Herstellung, der mit erheblicher Gasblasenentwicklung einher geht, und zum anderen an dem erforderlichen Vereinzeln des Wafers in einzelne Chips, das typischerweise unter Einwirkung eines spülenden Wasserstrahls stattfindet. Bei beiden Prozessabschnitten werden fragile Mikroaktorbauteile mit Siliziumaufhängungen durch die einwirkenden Kräfte leicht zerstört.

Zur Vermeidung dieser Problematik können die Torsions- oder Biegeelemente dicker ausgestaltet werden. Um dennoch eine ausreichend weiche Aufhängung für die erforderlichen Kippwinkel zu erhalten, müssen die Torsions- oder Biegeelemente jedoch gleichzeitig deutlich verlängert werden. Die Steifigkeit eines derartigen Elementes nimmt mit der dritten Potenz der Breite bzw. Dicke des Elementes zu, sie nimmt jedoch nur linear mit wachsender Länge ab. Für eine ausreichend weiche Aufhängung sind daher Dimensionen erforderlich, die den Vorteil der Miniaturisierbarkeit dieser Systeme wieder schwinden lassen. Gerade für Massenanwendungen, beispielsweise als Displays in Automobilen, in Hubschraubern oder Flugzeugen oder als von Hand gehaltene Barcode-Scanner, bieten diese Mikrosysteme daher noch keine ausreichende mechanische Stabilität.

Die DE 198 00 745 A1 beschreibt einen mikromechanischen Schwingspiegel, der auch als Scanelement zur Ablenkung eines Laserstrahls eingesetzt werden kann. Die aus galvanisch abgeschiedenem Metall gebildete Spiegelplatte ist über eine oder mehrere senkrecht zu einer Substratoberfläche verlaufende Stützen aufgehängt. Die Stützen werden zusammen mit der Spiegelplatte galvanisch auf dem Trägersubstrat abgeschieden. Für die Fertigung dieses Systems wird eine Opferschichttechnik mit Photolack eingesetzt, mit der Strukturen mit einer Dicke bis zu 150 µm erzeugt werden können. Sämtliche Ausgestaltungen des mikromechanischen Schwingspiegels der D1 werden mit reiner Oberflächenmikromechanik-Technik hergestellt. Der Vorteil des offenbarten Aufbaus wird darin gesehen, dass die Vorrichtung spannungs- und temperaturkompensiert ist, so dass sowohl eine Freiheit in der Materialauswahl als auch in der Wahl der Betriebstemperatur besteht.

Aus der EP 0 650 133 A2 ist ein integrierter Scanner mit Mikrospiegeln bekannt, die über Torsionsbalken an einem Rahmen befestigt sind. Als Materialien werden hierbei unter anderem Silizium für die Mikrospiegel und ein metallisches Material, insbesondere ein Bimetall oder eine Titan-Nickel-Legierung (als Memory-Metall), für die Torsionsbalken vorgeschlagen. Durch diese spezielle (bi)metallische Ausgestaltung der Torsionselemente können diese durch gezieltes Aufheizen eine Veränderung der Spiegelstellung bewirken. Auf eine verbesserte Stabilität derartiger Torsionselemente wird jedoch in der Druckschrift kein Hinweis gegeben. Die darin angedeuteten Herstellungstechniken erlauben zudem nur Dicken des metallischen Materials, die unterhalb weniger µm liegen.

Die Aufgabe der vorliegenden Erfindung besteht darin, ein Mikroaktorbauteil, insbesondere für einen Mikrospiegelscanner, sowie ein Verfahren zur Herstellung des Mikroaktorbauteils anzugeben, das bei kompakter Bauweise eine sehr hohe Vibrations- und Schockunempfindlichkeit aufweist und in entsprechender Ausgestaltung als Spiegel für den Einsatz zur kontinuierlichen Strahlablenkung von kohärentem Licht geeignet ist.

Die Aufgabe wird mit dem Mikroaktorbauteil nach Anspruch 1 bzw. dem Verfahren nach Anspruch 10 gelöst. Vorteilhafte Ausgestaltungen des Mikroaktorbauteils sowie des Verfahrens sind Gegenstand der Unteransprüche.

Das erfindungsgemäße Mikroaktorbauteil besteht aus einem kippbaren plattenförmigen Aktorelement, das in einer Ausnehmung eines Trägersubstrates angeordnet, von einem offenen oder geschlossenen metallischen Rahmen auf der Oberfläche des Trägersubstrates umgeben und über ein oder mehrere Biege- und/oder Torsionselemente am Trägersubstrat aufgehängt ist, wobei die ein oder mehreren Biege- und/oder Torsionselemente aus einem elastischen Metall gebildet und am metallischen Rahmen befestigt sind. Das Aktorelement hat hierbei eine laterale Ausdehnung von zumindest 250 µm, so dass es als Mikrospiegel für die Ablenkung eines kohärenten Lichtbündels geeignet ist. Das Trägersubstrat besteht hierbei vorzugsweise aus einkristallinem Silizium. Die ein oder mehreren Biege- und/oder Torsionselemente, die beispielsweise in Form von Federn, Balken oder Bändern ausgestaltet sein können, weisen eine Dicke von zumindest 7 µm auf und sind am Übergang zum Aktorelement und/oder zum Trägersubstrat verbreitert.

Metalle zeigen im Gegensatz zum spröden Silizium, welches nach Überschreiten des Elastizitätsbereichs sofort bricht, duktiles Verhalten. Sie brechen nach dem Überschreiten des Elastizitätsbereichs nicht sofort, sondern beginnen zunächst sich plastisch zu verformen. Unter einem elastischen Metall ist in diesem Zusammenhang ein Metall zu verstehen, das eine ausreichende Elastizität für ein reversibles Kippen des Aktorelementes aufweist. Dem Fachmann sind geeignete Metalle mit derartigen Eigenschaften bekannt. So eignen sich beispielsweise die Metalle Kupfer oder Gold nicht für die Biege- und/oder Torsionselemente, da diese weichen Materialien sich sehr leicht plastisch verformen und damit nicht die für eine Federwirkung erforderliche Elastizität aufweisen. Metalle mit guten elastischen Eigenschaften stellen beispielsweise Nickel, Wolfram oder deren Legierungen dar. Vorzugsweise werden beim erfindungsgemäßen Mikroaktorbauteil jedoch Nickel oder Nickellegierungen, wie NiFe oder NiCoFe, eingesetzt, da sich diese mit Mitteln der Halbleitertechnologie sehr einfach aufbringen und strukturieren lassen. Nickel besitzt einen sehr großen elastischen Bereich und weist eine deutlich höhere Bruchspannung auf als Silizium. Nickel ist daher als widerstandsfähiges Material für die Biege- und/oder Torsionselemente hervorragend geeignet.

Die Biege- und/oder Torsionselemente bestehen vorzugsweise vollständig aus dem elastischen Metall. Es versteht sich jedoch von selbst, dass sie beispielsweise mit einer dünnen Schutzschicht aus einem anderen Material versehen sein können. Die Verbindung der metallischen Biege- und/oder Torsionselemente mit dem Aktorelement oder dem Trägersubstrat erfolgt über entsprechend große Auflageflächen auf dem Aktorelement. oder dem Trägersubstrat, die als Verankerungen dienen. Die Größe dieser Verbindungs- bzw. Auflageflächen ist ein Maß für die Festigkeit der Verbindung.

Das Aktorelement ist plattenförmig ausgestaltet. Es kann hierbei aus einer Halbleiterplatte, beispielsweise aus Silizium, oder auch aus einer Metallplatte bestehen. Es ist in einer Ausnehmung oder Öffnung des Trägersubstrates angeordnet, so dass es von dem Trägersubstrat rahmenförmig umgeben ist. Eine derartige Geometrie ist bereits von den eingangs erläuterten Mikrospiegelscannern des Standes der Technik bekannt (vgl. Fig. 1).

Die erfindungsgemäße Ausgestaltung des Mikroaktorbauteils erhöht dessen Robustheit und Belastbarkeit gegenüber Vibrationen und Stößen in vorteilhafter Weise, ohne die Dimensionen im Vergleich zu bekannten Mikroaktorbauteilen der gleichen Funktion vergrößern zu müssen. Die Steifigkeit der Biege- und/oder Torsionselemente lässt sich durch entsprechendes Design kompakter, dünner Federn, Bänder oder Balken ideal einstellen, so dass sie insbesondere bei Einsatz in Mikrospiegelscannern optimal an die relativ geringen zur Verfügung stehenden Antriebskräfte angepasst werden können. Ein auf dem erfindungsgemäßen Mikroaktorbauteil basierender Mikroscanner kann daher im Gegensatz zu den reinen Silizium-Mikroscannern trotz großer erzielbarer Auslenkungen bei kleinen Antriebskräften ausreichend vibrationsunempfindlich bereitgestellt werden. Die Ausbildung der Mikroscanner mit den erfindungsgemäßen Elementen erlaubt eine gegenüber reinen Silizium-Mikroscannern drastische Steigerung der Ausbeute während der Fertigung - bezogen auf Systeme mit vergleichbar weichen Aufhängungen. Das erfindungsgemäße Mikroaktorbauteil lässt sich zudem sehr einfach und kostengünstig mit den nachfolgend dargestellten Verfahren der Halbleitertechnologie herstellen.

Die Vibrations- und Schockunempfindlichkeit wird durch Vorsehen eines metallischen Rahmens auf dem Trägersubstrat deutlich erhöht. Hierbei sind die Biege- und/oder Torsionselemente nicht am Trägersubstrat selbst, sondern an dem metallischen Rahmen befestigt. Der Rahmen übernimmt eine schockabsorbierende Funktion, um den gesamten Chip, bestehend aus Trägersubstrat und Aktorelement mit den zugehörigen Aufhängungen, erfolgreich gegen Bruch bei einwirkenden starken Beschleunigungen zu schützen. Der metallische Rahmen ist hierbei auf der Oberfläche des Trägersubstrates angebracht und umgibt das Aktorelement. Der Rahmen besteht vorzugsweise aus dem gleichen elastischen Metall wie die Torsions- und/oder Biegeelemente und ist vorzugsweise geschlossen ausgeführt. Da die metallischen Torsions- oder Biegefedern in dem umgebenden Metallrahmen enden, können Vibrationen der Spiegelplatte und der Torsionsfedern optimal durch den Rahmen aufgenommen und entschärft werden. Der umgebende Metallrahmen schränkt dabei in keiner Weise die Funktionalität des Mikroaktorbauteils ein.

In einer Ausgestaltung stimmt der Innenumfang des Rahmens nicht mit dem Innenumfang der Ausnehmung des Trägersubstrates überein, sondern ist.größer vorgesehen. Durch eine gleichzeitig erhabene Form dieses Rahmens, beispielsweise in Form eines umlaufenden Balkens, können die Torsions- und/oder Biegeelemente am oberen Rand des Rahmens befestigt werden, so dass sie einen ausreichenden Abstand zur Oberfläche des Trägersubstrates haben, um dieses nicht zu berühren. Auf diese Weise kann die Länge der Torsions- bzw. Biegeelemente vergrößert werden, ohne die Größe des Trägersubstrates zu ändern. Hierdurch wird die Designfreiheit des Mikroaktorbauteils zusätzlich erhöht. Alternativ ermöglicht diese Ausgestaltung bei gleich bleibender Torsionsfederlänge die Verringerung der Größe des Trägersubstrates. Gleichzeitig dient das von der Torsionsfeder überspannte Trägersubstrat als Anschlag bei vertikal nach unten gerichteter Überlast, beispielsweise bei Schock oder zu hoher Antriebskraft, und schützt dadurch die Aufhängung vor Überdehnung.

Die Torsions- und/oder Biegeelemente weisen im Bereich ihrer Einspannungen sich kontinuierlich aufweitende Bereiche auf. Diese Verbreiterungen zum Aktorelement oder zum Trägersubstrat hin bewirken, dass beim Einsatz auftretende Scherbelastungen in den Torsions- oder Biegeelementen besser abgefangen und verteilt werden können.

Als Antriebsprinzip für das vorliegende Mikroaktorbauteil können alle aus dem Stand der Technik bekannten Techniken eingesetzt werden. So lässt sich das Mikroaktorbauteil beispielsweise auf ein weiteres Substrat mit Elektroden aufbringen, die dann unterhalb des plattenförmigen Aktorelementes angeordnet sind. Weiterhin können am Rand der Ausnehmung an der Oberfläche des Trägersubstrates Elektroden vorgesehen sein. Besteht das plattenförmige Aktorelement in diesem Fall aus Metall oder ist mit einer metallischen Beschichtung versehen und in der Höhe versetzt zu der Ebene der Elektroden angeordnet, so kann durch Beaufschlagung der Elektroden mit einer Spannung eine Verkippung des Aktorelementes herbeigeführt werden. Weitere Beispiele hierfür sind in den weiter unten angeführten Ausführungsbeispielen dargestellt.

Bei dem vorliegenden Verfahren wird zunächst ein Halbleitersubstrat, vorzugsweise aus Silizium, bereitgestellt. Auf diesem Substrat wird eine strukturierte Maskierungsschicht erzeugt, mit der die laterale Struktur des Trägersubstrates und des Aktorelementes festgelegt wird. Die Maskierungsschicht dient insbesondere der Maskierung für den späteren nasschemischen Ätzprozess des Siliziums. Zur Strukturierung der Maskierungsschicht werden mikrotechnische Standardverfahren wie Photolithographie und Plasmaätzen eingesetzt. Schließlich werden eine Galvanikstartschicht und eine dicke Photolackschicht auf die Oberfläche aufgebracht. Die dicke Photolackschicht wird zur Definition der Bereiche für die ein oder mehreren Biege- und/oder Torsionselemente strukturiert. In diese Strukturen wird ein elastisches Metall abgeschieden, um die ein oder mehreren durch die Struktur festgelegten Biege- und/oder Torsionselemente zu bilden. Anschließend wird der Photolack wieder entfernt, so dass die galvanisch abgeschiedenen Strukturen auf der Oberfläche zurückbleiben.

Auf diese Weise lassen sich metallische Strukturen mit einer Dicke von bis zu 100 µm erzeugen. Durch die Abscheidedauer kann in weiten Bereichen die Dicke und damit die Steifigkeit der Torsions- und/oder Biegeelemente eingestellt werden. Abschließend werden die Biege- und/oder Torsionselemente und das Aktorelement durch Wegätzen von Bereichen des Halbleitersubstrates freigelegt. Der Ätzvorgang muss hierbei von der Vorder- und von der Rückseite erfolgen, um das Aktorelement mit der gewünschten Dicke aus dem Halbleitermaterial zu erzeugen.

Die additive Abscheidung der Torsions- und/oder Biegeelemente hat gegenüber dem nasschemischen Herausätzen der Elemente aus dem Silizium-Einkristall den Vorteil, dass eine große Flexibilität hinsichtlich der Geometrie dieser Torsions- oder Biegeelemente besteht und die Geometrie nicht an die Orientierung der Kristallachsen des Siliziums gebunden ist. So lassen sich auch auf kleinstem Raum gefaltete Federelemente abscheiden, die die notwendige Nachgiebigkeit besitzen.

Der metallische Rahmen in einer Ausführungsform des erfindungsgemäßen Verfahrens kann auf die gleiche Weise wie die Torsions- und/oder Biegeelemente galvanisch auf der Oberfläche gebildet bzw. abgeschieden werden. Eine Ausgestaltung wie die des Patentanspruches 3, bei der die Torsions- und/oder Biegeelemente in einem Abstand über der Oberfläche des Trägersubstrates am Rahmen aufgehängt sind, lassen sich durch zusätzliches Abscheiden einer Opferschicht vor dem galvanischen Aufbringen der Torsions- oder Biegeelemente realisieren, die anschließend herausgeätzt wird.

Die Erfindung wird nachfolgend anhand von Ausführungsbeispielen in Verbindung mit den Zeichnungen nochmals beispielhaft erläutert. Hierbei zeigen:
- Fig. 1: die Geometrie eines Mikroaktorbauteils, wie sie auch aus dem Stand der Technik bekannt ist;
- Fig. 2: ein Ausführungsbeispiel eines erfindungsgemäßen Mikroaktorbauteils;
- Fig. 3: ein weiteres Ausführungsbeispiel eines erfindungsgemäßen Mikroaktorbauteils;
- Fig. 4: ein Beispiel für ein Verfahren zur Herstellung eines erfindungsgemäßen Mikroaktorbauteils;
- Fig. 5: ein weiteres Beispiel für ein Verfahren zur Herstellung eines erfindungsgemäßen Mikroaktorbauteils;
- Fig. 6: ein Beispiel für das Antriebsprinzip eines erfindungsgemäßen Mikroaktorbauteils;
- Fig. 7: ein Beispiel für eine Versteifungsstruktur des Aktorelementes des erfindungsgemäßen Mikroaktorbauteils;
- Fig. 8: ein weiteres Beispiel für eine Versteifungsstruktur für das Aktorelement des erfindungsgemäßen Mikroaktorbauteils;
- Fig. 9: ein Beispiel für ein weiteres Antriebsprinzip eines erfindungsgemäßen Mikroaktorbauteils;
- Fig. 10: ein weiteres Beispiel für eine Versteifungsstruktur des Aktorelementes eines erfindungsgemäßen Mikroaktorbauteils; und
- Fig. 11: ein Beispiel für einen auf Basis des erfindungsgemäßen Mikroaktorbauteils realisierten zweiachsigen Mikroscanner in Draufsicht.

Fig. 1 zeigt ein Beispiel für die Geometrie eines erfindungsgemäßen Mikroaktorbauteils. Eine derartige Geometrie wird auch im Stand der Technik eingesetzt. Das Mikroaktorbauteil besteht aus einem starren Rahmen eines Trägersubstrates 1, das eine Ausnehmung 2 aufweist, in dem eine beweglich aufgehängte Spiegelplatte 3 als Aktorelement angeordnet ist. Die Spiegelplatte 3 ist mittels zweier als Torsionsfedern ausgestaltete Torsionselemente 4 am Substrat 1 aufgehängt. Die lateralen Abmessungen der Spiegelplatte 3 eines derartigen Mikroaktorbauteils liegen in der Regel im Bereich von 1 bis 5 mm.

Beim Mikroaktorbauteil der vorliegenden Erfindung sind die Torsionsfedern 4 nicht aus Silizium, sondern aus einem elastischen Metall, wie Nickel, gebildet.

Eine besonders vorteilhafte Ausführungsform des erfindungsgemäßen Mikroaktorbauteils ist in den Figuren 2 und 3 dargestellt. Bei beiden Bauteilen ist auf einem Siliziumchip 1 als Trägersubstrat ein Metallrahmen 5 vorgesehen, der die Ausnehmung 2 umschließt. Die metallischen Torsionselemente 4 sind an diesem Metallrahmen 5 befestigt. Weiterhin sind in den beiden Figuren Aufweitungsstrukturen 6 an den Torsionselementen 4 im Bereich der Übergänge zum Metallrahmen 5 bzw. zum Spiegel 3 zu erkennen. Diese Aufweitungsstrukturen bzw. Verbreiterungen dienen der besseren Aufnahme von Scherkräften in den Torsionselementen.

Die beiden Ausführungsformen der Figuren 2 und 3 unterscheiden sich lediglich in der Form der Torsionselemente 4, die bei der Ausgestaltung der Fig. 3 in gefalteter Form ausgebildet sind. Diese Ausgestaltung lässt sich sehr vorteilhaft durch das erfindungsgemäße Verfahren zur Herstellung der Mikroaktorbauteile verwirklichen. Der schockabsorbierende Metallrahmen 5 als Aufhängung für die beweglichen Spiegelplatten erhöht die Robustheit des Gesamtsystems in vorteilhafter Weise.

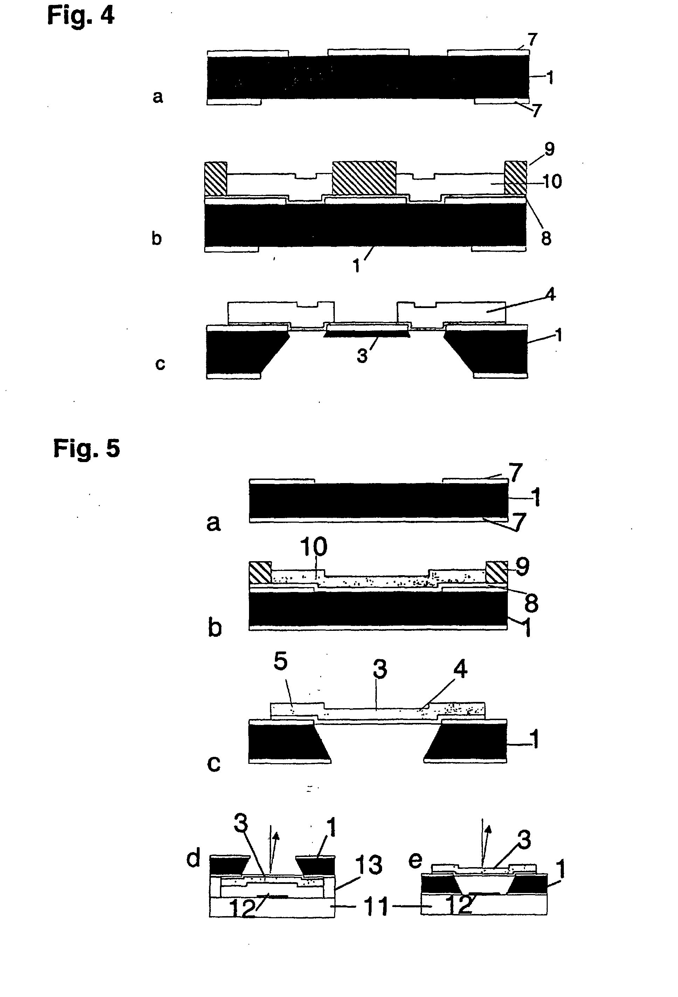

Fig. 4 zeigt ein Beispiel für die Herstellung eines erfindungsgemäßen Mikroaktorbauteils mit einer Silizium-Spiegelplatte 3 als Aktorelement. Der Prozess beginnt mit der Abscheidung und Strukturierung einer Maskierschicht 7 aus Siliziumnitrid für das nasschemische Ätzen von Silizium, beispielsweise in Kalilauge (KOH) oder in Tetramethylammoniumhydroxid (TMAH). Zur Strukturierung werden mikrotechnische Standardverfahren wie Photolithographie und Plasmaätzen angewandt. Die Maskierschicht 7 wird hierbei auf Vorder- und Rückseite des Substrates 1 aufgebracht (Fig. 4a). Die nach der Strukturierung freiliegenden Bereiche des Siliziumsubstrates 1 stellen Bereiche dar, die am Schluss des Prozesses weggeätzt werden müssen.

Anschließend wird eine dünne metallische Galvanikstartschicht 8, typischerweise aus Gold, ganzflächig abgeschieden und darauf eine ca. 25 µm dicke Photolackschicht 9 strukturiert. Die Strukturierung erfolgt zur Festlegung der Bereiche für die Torsionselemente und den Metallrahmen. In den freibelichteten Photolackstrukturen wird anschließend galvanisch Metall 10, wie beispielsweise Nickel, abgeschieden. Dadurch werden der Metallrahmen 5 und die Torsionsfedern 4 hergestellt (Fig. 4b). Durch die Abscheidedauer kann in weiten Bereichen die Federdicke und damit die Federsteifigkeit eingestellt werden.

Der Photolack 9 und die unbeschichteten Bereiche der Galvanikstartschicht 8 werden anschließend entfernt. Schließlich wird durch nasschemisches Ätzen in KOH oder TMAH der Spiegel 3 freigeätzt (Fig. 4c). Die Dicke dieses Spiegels 3, die durch das rückseitige Ätzen beeinflussbar ist, kann auch durch Verwendung eines SOI-Substrates als Trägersubstrat 1 exakt eingestellt werden. Dem Fachmann sind die entsprechenden Herstellungsschritte geläufig.

Ein weiteres Verfahren zur Herstellung eines Mikroaktorbauteils ist in Fig. 5 dargestellt. Bei diesem Verfahren wird die Spiegelplatte 3 nicht aus Silizium, sondern aus einem elastischen Metall 10 gebildet. Dieses Verfahren kommt im Gegensatz zu dem Verfahren der Fig. 4 mit der Strukturierung des Siliziumsubstrates 1 allein von der Vorderseite aus. Dies bedeutet einen erheblich geringeren Fertigungsaufwand.

Zunächst wird beidseitig eine Maskierschicht 7 aus Siliziumnitrid abgeschieden und vorderseitig im Bereich der später beweglichen Elemente geöffnet (Fig. 5a). Die Rückseite bleibt unstrukturiert. Vorderseitig wird eine Galvanikstartschicht 8 abgeschieden und daraufhin ein 25 µm dicker Photolack 9 aufgeschleudert und strukturiert. Die strukturierten Bereiche dienen der Festlegung der Form der Spiegelplatte 3, der Aufhängung bzw. Torsionselemente 4 und des Metallrahmens 5. In den freibelichteten Bereichen wird galvanisch ein elastisches Metall 10 abgeschieden, wodurch die Spiegelplatte 3, die Aufhängungs- bzw. Torsionselemente 4 und der Metallrahmen 5 gebildet werden (Fig. 5b). Der Photolack 9 wird abgelöst und die Galvanikstartschicht 8 in den seitlichen Bereichen entfernt. Schließlich wird der Wafer nasschemisch geätzt. Hierbei greift die Ätzflüssigkeit allein von der Vorderseite durch die durch die Maskierschicht 7 freigelegten Bereiche an. Der Prozess ist abgeschlossen, wenn der Metallspiegel 3 von der Unterseite her komplett von Silizium befreit ist und ein Durchbruch 2 zur Unterseite des Trägersubstrates 1 existiert (Fig. 5c).

Da die galvanisch abgeschiedenen relativ dicken metallischen Schichten von bis zu 100 µm Dicke bereits erhebliche Oberflächen-Rauigkeiten aufweisen, kann der Spiegel, wie in Fig. 5d gezeigt, auch von der Rückseite her betrieben werden. Die Rückseite der Spiegelplatte 3 besteht an der Oberfläche aus der Galvanikstartschicht 8, die eine sehr geringe Rauigkeit aufweist und dadurch wenig Streulicht erzeugt. Mit höherer Streulichterzeugung ist dagegen die Benutzung der eigentlichen Spiegeloberseite, wie unter Fig. 5e dargestellt, verbunden. In beiden der letztgenannten Figuren ist eine Konfiguration für elektrostatischen Antrieb der Spiegelplatte 3 dargestellt. Hierzu wird das Trägersubstrat 1 mit der Vorder- oder Rückseite auf ein weiteres Substrat 11 aufgebracht, auf dem Elektroden 12 angeordnet sind, über die die Spiegelplatte 3 bewegt werden kann. Bei rückseitiger Betriebsweise ist zwischen dem Substrat 11 und dem Trägersubstrat 1 noch eine Abstandsschicht 13 vorzusehen, damit die Elektroden die Spiegelplatte nicht berühren.

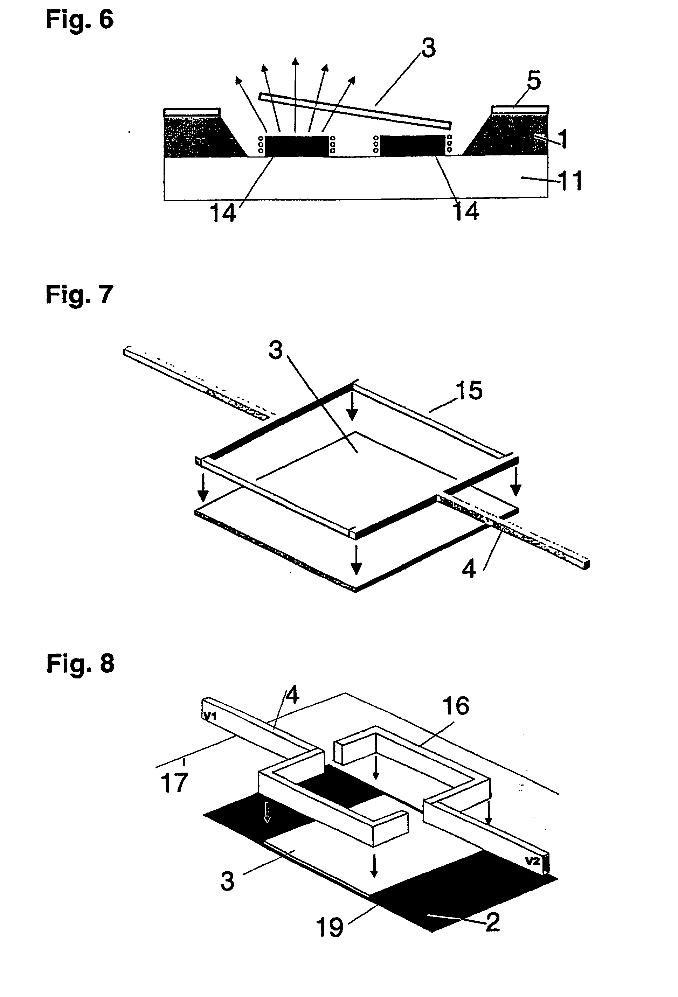

Ist die Spiegelplatte aus galvanisch abgeschiedenem Nickel oder einer Nickellegierung hergestellt, können die weichmagnetischen Eigenschaften dieses Materials genutzt werden, um sehr einfache elektromagnetische Antriebe zu realisieren. Ein Beispiel hierfür ist aus Fig. 6 ersichtlich. Diese zeigt einen Schnitt durch ein erfindungsgemäßes Mikroaktorbauteil, das auf einem Grundsubstrat 11 aufgebracht ist. Auf diesem Grundsubstrat sind unterhalb der Spiegelplatte 3 zwei Elektromagnete 14 zur Erzeugung eines magnetischen Feldes vorgesehen, über die die Spiegelplatte bewegt werden kann, wie dies in der Figur schematisch dargestellt ist (linker Elektromagnet an - rechter Elektromagnet aus). Die Elektromagnete 14 sind vorzugsweise als Planarspulen ausgebildet.

Typische Abmessungen der mit den vorgestellten Verfahren gefertigten Mikroaktorbauteile liegen bei Spiegelgrößen mit einer Kantenlänge von 1 bis 3 mm, Torsionselementen mit Breiten zwischen 10 und 30 µm, Höhen zwischen 7 und 25 µm sowie Längen zwischen 1 und 2 mm. In der Regel wird für die Torsionselemente die Abscheidung einer möglichst hohen Metallschicht 10 angestrebt, so dass die Durchbiegung dieser Elemente aufgrund der Gravitation vermindert wird. Die Torsionselemente bzw. -federn sind daher vorzugsweise höher als breit.

Bei der Anordnung eines Bauteils auf einem Grundsubstrat 11, wie in den Figuren 5d und 5e dargestellt, wird vorzugsweise ein Grundsubstrat aus Glas eingesetzt. Die Verbindung zwischen Trägersubstrat 1 und Grundsubstrat 11 kann mittels Kleben oder einer Bondingtechnik erfolgen.

Bei der Herstellung metallischer Spiegelplatten führt materialeigener Schichtstress, insbesondere Stressgradienten, dazu, dass sich die metallischen Spiegelplatten einer Dicke von bis zu 25 µm durchbiegen. Diese Durchbiegung muss auf ein Minimum reduziert werden. Da es schwer oder kaum möglich ist, die Abscheideparameter so perfekt einzustellen, dass der Stress der Metallplatte vernachlässigbar bleibt, wird die Verbiegung vorzugsweise durch zusätzlich versteifend wirkende Elemente auf den Metallplatten reduziert. Eine Möglichkeit der zusätzlichen Versteifung besteht darin, ein versteifendes Profil zusätzlich an den Rändern des Spiegels abzuscheiden, wie dies in Fig. 7 dargestellt ist. Dieses versteifende Profil ist in diesem Beispiel in Form eines metallischen Rahmens 15 ausgestaltet, an dem die Torsionsfedern 4 angebracht sind. Dies führt neben der verbesserten Ebenheit allerdings auch zu einer Erhöhung der Spiegelmasse und damit des Trägheitsmomentes des Spiegels.

In einer weiteren Ausführungsform gemäß Fig. 8 wird die Versteifung nicht durch einen geschlossenen Rahmen erreicht, sondern durch zwei metallische Rahmenelemente 16, die jeweils mit einem der Torsionselemente 4 verbunden sind. Diese Rahmenelemente 16 können hierdurch bei Beaufschlagung mit unterschiedlichen Spannungen V1 bzw. V2 gleichzeitig als Randelektroden dienen, um eine Kippbewegung des Spiegels hervorzurufen. Dies wird insbesondere durch die mittels galvanischer Abscheidung erzeugbaren hohen Strukturen dieser Rahmenelemente ermöglicht. Ein derartiges elektrostatisches Antriebsprinzip ist besonders für den resonanten Betrieb des Spiegels geeignet. Hierzu ist es allerdings erforderlich, die beiden Rahmenelemente 16 gegeneinander zu isolieren, so dass sie auf definierter Potentialdifferenz zueinander und in Bezug auf den umgebenden Chiprahmen gehalten werden können. Durch den Höhenunterschied zwischen den versteifenden Rahmenelementen 16 und dem Chiprahmen kommt es bei Anlegen einer elektrischen Spannung zu einem effektiven Drehmoment unter der Voraussetzung, dass an der gegenüberliegenden Spiegelseite zwischen dem Chiprahmen und den Rahmenelementen nicht die gleiche elektrische Spannung anliegt.

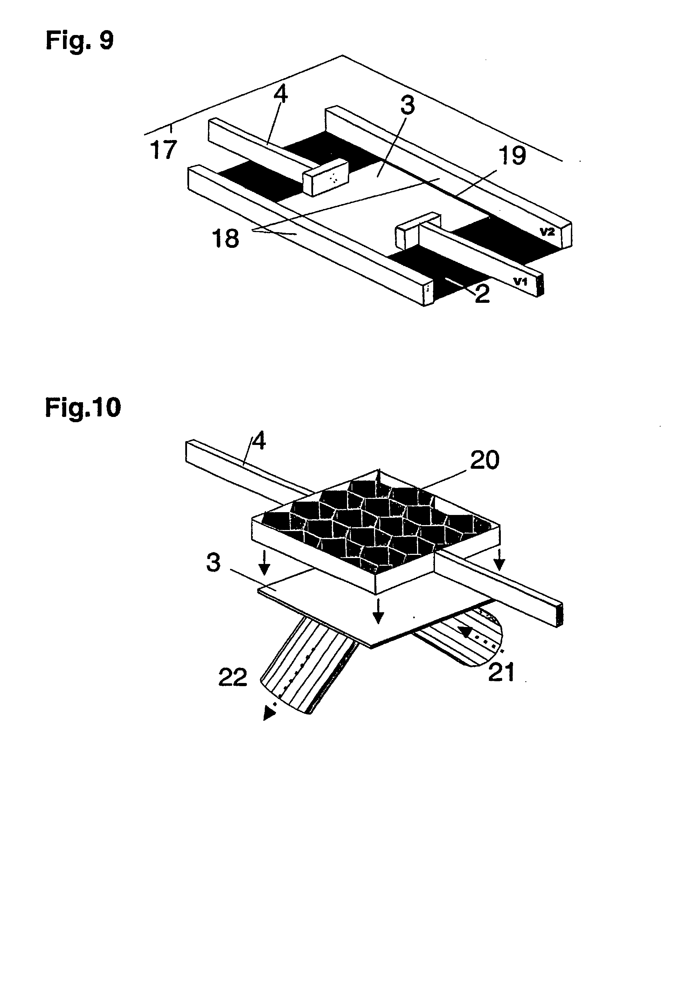

Das gleiche Antriebsprinzip lässt sich auch realisieren, wenn eine entsprechende Randelektrode 18 auf dem Siliziumchip 1 in geringem Abstand und isoliert zur Spiegelplatte 3 vorgesehen ist. Dies ist in Fig. 9 dargestellt. Das Drehmoment ergibt sich hierbei wiederum durch den Höhenunterschied zwischen der Spiegelplatte 3 und der Randelektrode 18, wobei in diesem Fall die Spiegelplatte über die Torsionselemente 4 auf einer anderen Spannung V1 liegt als die jeweilige Randelektrode (Spannung V2).

Bei den beiden Ausführungsformen der Figuren 8 und 9 muss jeweils zwischen Spiegelelement 3 und Chip bzw. Trägersubstrat 1 ein ausreichend großer Luftspalt 19 vorliegen, um einen elektrischen Kurzschluss zu verhindern. Bei der Ausführungsform der Fig. 9 liegt der Vorteil darin, dass die Randelektroden 18 nicht auf dem Spiegel befestigt sind, so dass eine geringere Spiegelmasse ermöglicht wird. Dieses Antriebskonzept ist sowohl für resonanten als auch nichtresonanten Betrieb des Spiegels mit beliebiger Frequenz geeignet.

Fig. 10 zeigt schließlich ein weiteres Beispiel für eine Versteifungsstruktur einer metallischen Spiegelplatte 3. Hierbei ist eine galvanisch abgeschiedene Hohlstruktur 20, beispielsweise als Hexagonalstruktur oder als Dreieckstruktur, mit vertikalen Wänden auf der Spiegelplatte 3 vorgesehen. Die Spiegelplatte kann bei dieser Anordnung nur wenige Mikrometer dünn ausgestaltet sein. Sie besteht vorzugsweise nur noch aus einer dünnen Folie, über der die Verstrebungsstruktur erzeugt wird. Durch die zahlreichen Hohlräume kann sich der Schichtstress nicht mehr wie in einer geschlossenen Schicht ausbilden. Eine Verbiegung ist stark erschwert. In diesem Fall ist es allerdings notwendig, die Rückseite des Spiegels 3 zur Strahlablenkung zu nutzen. Der einfallende 21 und reflektierte Strahl 22 ist in der Abbildung zu erkennen. Diese Figur stellt nur einen Ausschnitt einer Ausführungsform des erfindungsgemäßen Mikroaktorbauteils dar. Die übrigen Elemente können wie in einer der vorangehenden Figuren ausgeführt werden.

Der große Vorteil dieser hohlen Versteifungsstruktur liegt in der gleichzeitig reduzierten Spiegelmasse, da der Spiegel dünner ausgestaltet werden kann. Diese gleichzeitige Reduzierung der Masse erlaubt es trotz Versteifung, sehr hohe Resonanzfrequenzen mit diesem System zu erzielen.

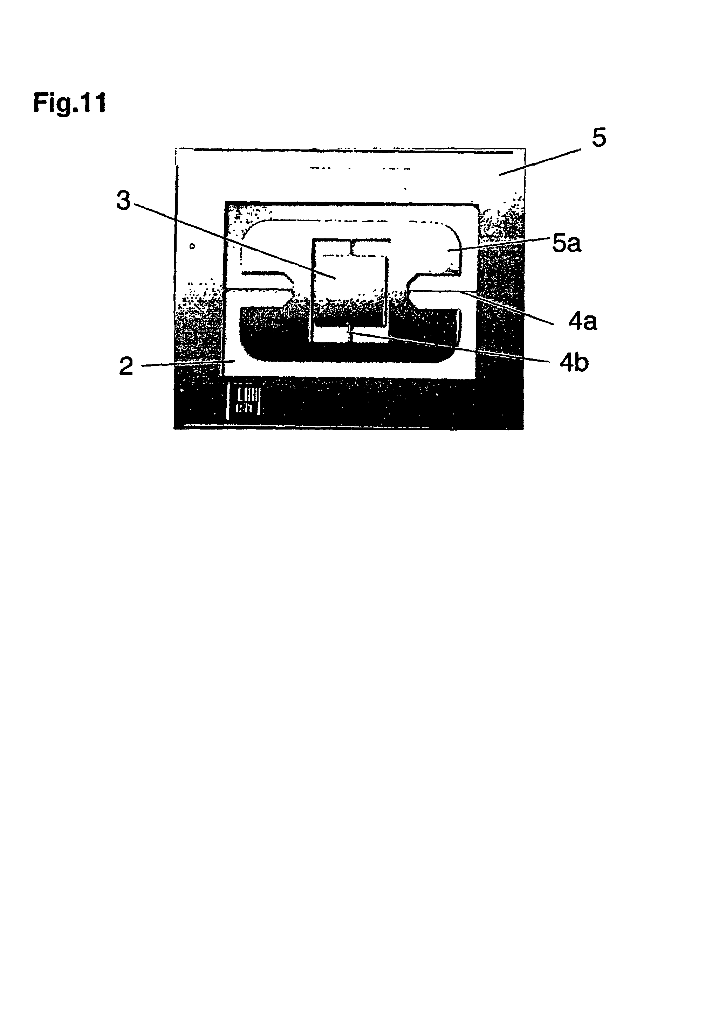

Fig. 11 zeigt schließlich in Draufsicht ein Beispiel eines zweiachsigen Mikroscanners auf engstem Raum, bei dem eine Ausführungsform der erfindungsgemäßen Mikroaktorbauteile eingesetzt wurde. Dieser zweiachsige Scanner besteht aus einem Nickelrahmen 5 auf einem (nicht dargestellten) Trägersubstrat. An dem Nickelrahmen 5 ist über zwei Torsionselemente 4a ein weiterer Nickelrahmen 5a aufgehängt. Innerhalb dieses Rahmens 5a ist schließlich die Spiegelplatte 3 aus Nickel über zwei weitere Torsionselemente 4b an diesem aufgehängt. Die äußeren Torsionselemente 4a bilden eine Torsionsachse, die senkrecht zur durch die weiteren Torsionselemente 4b gebildeten Torsionsachse steht. Wie leicht ersichtlich ist, lässt sich hierdurch ein zweidimensionales Ablenksystem realisieren. Das gesamte System kann auf einfache Weise über galvanische Schichtabscheidung der metallischen Rahmen und Torsionselemente, wie dies beispielsweise in Fig. 5 dargestellt ist, hergestellt werden.

Das erfindungsgemäße Mikroaktorbauteil ermöglicht die Bereitstellung von extrem kompakten, monolithischen Mikroscannern mit den erforderlichen weichen, mechanischen Federn und einer sehr hohen Vibrations- und Schockunempfindlichkeit. Neben dem Einsatz in Zweiachsenscannern für die portable Laserscan-Mikroskopie, in Barcode-Scannern, in Biochip-Readern, in der Reprographie und Druckertechnik, beim Laserfernsehen, in der holographischen Datenspeicherung, in kompakten Displays im Auto oder Flugzeug sowie in Laserbearbeitungseinrichtungen oder in der Messtechnik lassen sich derartige Mikroaktorbauteile beispielsweise auch in Positioniereinheiten oder Mikrorühreinrichtungen einsetzen.

### BEZUGSZEICHENLISTE

- 1: Trägersubstrat
- 2: Ausnehmung
- 3: Aktorelement bzw. Spiegelplatte
- 4,4a,4b: Torsionselement
- 5, 5a: Metallrahmen
- 6: Aufweitungsstruktur
- 7: Maskierungsschicht
- 8: Galvanikstartschicht
- 9: Photolack
- 10: galvanisch abgeschiedenes Metall
- 11: Grundsubstrat
- 12: Elektroden
- 13: Abstandsschicht
- 14: Elektromagnet
- 15: versteifender Rahmen
- 16: versteifende Rahmenelemente
- 17: Rand des Trägersubstrates bzw. Chips
- 18: Randelektroden
- 19: Luftspalt
- 20: versteifende Hohlstruktur
- 21: einfallender Laserstrahl
- 22: reflektierter Laserstrahl

## Patentansprüche

1. Mikroaktorbauteil, insbesondere für einen Mikrospiegelscanner, mit einem kippbaren plattenförmigen Aktorelement (3), das in einer Ausnehmung (2) eines Trägersubstrates (1) angeordnet, von einem offenen oder geschlossenen metallischen Rahmen (5) auf der Oberfläche des Trägersubstrates (1) umgeben und über ein oder mehrere Biege- und/oder Torsionselemente (4) am Trägersubstrat (1) aufgehängt ist, wobei die ein oder mehreren Biege- und/oder Torsionselemente (4) aus einem elastischen Metall gebildet und am metallischen Rahmen (5) befestigt sind,
**dadurch gekennzeichnet,**
**dass** das Aktorelement (3) eine laterale Ausdehnung von zumindest 250 µm aufweist und die ein oder mehreren Biege- und/oder Torsionselemente (4) eine Dicke von mindestens 7 µm aufweisen und am Übergang zum Aktorelement (3) und/oder zum Trägersubstrat (1) verbreitert sind.

2. Mikroaktorbauteil nach Anspruch 1,
**dadurch gekennzeichnet,**
**dass** das Aktorelement (3) eine Halbleiterplatte ist.

3. Mikroaktorbauteil nach Anspruch 1 oder 2,
**dadurch gekennzeichnet,**
**dass** der metallische Rahmen (5) einen größeren Innenumfang aufweist als die Ausnehmung (2) des Trägersubstrates, wobei die ein oder mehreren Biege- und/oder Torsionselemente (4) in einer Höhe über dem Trägersubstrat (1) am Rahmen (5) befestigt sind, in der sie das Trägersubstrat (1) nicht berühren.

4. Mikroaktorbauteil nach einem der Ansprüche 1 bis 3,
**dadurch gekennzeichnet,**
**dass** auf dem Trägersubstrat (1) im Bereich der Ausnehmung (2) Elektroden (18) gegenüber dem Aktorelement (3) in der Höhe versetzt angeordnet sind.

5. Mikroaktorbauteil nach einem der Ansprüche 1 bis 4,
**dadurch gekennzeichnet,**
**dass** die ein oder mehreren Biege- und/oder Torsionselemente (4) und/oder der metallische Rahmen (5) aus Nickel oder einer Nickellegierung bestehen.

6. Mikroaktorbauteil nach einem der Ansprüche 2 bis 5,
**dadurch gekennzeichnet,**
**dass** auf dem Aktorelement (3) eine Versteifungsstruktur (15, 16, 20) aufgebracht ist.

7. Mikroaktorbauteil nach Anspruch 6,
**dadurch gekennzeichnet,**
**dass** die Versteifungsstruktur (20) eine Hohlstruktur ist.

8. Mikroaktorbauteil nach Anspruch 6,
**dadurch gekennzeichnet,**
**dass** die Versteifungsstruktur (15, 16) aus einem oder mehreren balkenförmigen Elementen besteht, die sich am Rand des Aktorelementes (3) erstrecken.

9. Mikroaktorbauteil nach Anspruch 8,
**dadurch gekennzeichnet,**
**dass** die balkenförmigen Elemente elektrisch leitfähig und derart isoliert voneinander auf dem Aktorelement (3) angeordnet und mit den ein oder mehreren Biege- und/oder Torsionselementen (4) verbunden sind, dass eine Beaufschlagung der balkenförmigen Elemente über die ein oder mehreren Biege- und/oder Torsionselemente (4) mit einer elektrischen Spannung eine Kippbewegung des Aktorelementes (3) hervorruft.

10. Verfahren zur Herstellung eines Mikroaktorbauteils, insbesondere eines kippbar aufgehängten Mikrospiegels, das ein über ein oder mehrere Biege- und/oder Torsionselemente (4) an einem Trägersubstrat (1) aufgehängtes plattenförmiges Aktorelement (3) aufweist, mit folgenden Schritten:
- Bereitstellen eines Halbleitersubstrates (1);
- Erzeugen einer strukturierten Maskierungsschicht (7) auf einer vorderseitigen und einer rückseitigen Oberfläche des Halbleitersubstrates (1) zur Festlegung der lateralen Struktur des Trägersubstrates (1) und des Aktorelementes (3);
- Aufbringen einer Galvanikstartschicht (8) über der strukturierten Maskierungsschicht (7);
- Aufbringen einer dicken Photolackschicht(9) mit einer Dicke von mindestens 7 µm auf die Galvanikstartschicht (8);
- Strukturierung der Photolackschicht (9) zur Definition zumindest der Bereiche für die ein oder mehreren Biege- und/oder Torsionselemente (4) ;
- Galvanisches Abscheiden eines elastischen Metalls (10) zur Bildung der ein oder mehreren Biege- und/oder Torsionselemente (4) mit einer Dicke von mindestens 7 µm in die strukturierte Photolackschicht (9);
- Entfernen des Photolacks (9);
- Wegätzen von Bereichen des Halbleitersubstrates (1), die nicht von der Maskierungsschicht (7) bedeckt sind, von der Vorderseite und Wegätzen eines Bereiches des Halbleitersubstrates (1) von der Rückseite, um das Aktorelement (3) und die ein oder mehreren Biege- und/oder Torsionselemente (4) freizulegen.

11. Verfahren zur Herstellung eines Mikroaktorbauteils nach Anspruch 10,
**dadurch gekennzeichnet,**
**dass** beim Schritt der Strukturierung der Photolackschicht (9) auch der Verlauf eines offenen oder geschlossenen Rahmens (5) auf dem Halbleitersubstrat (1) festgelegt wird, der das Aktorelement (3) umschließt und die Verbindung zwischen den ein oder mehreren Biege- und/oder Torsionselementen (4) und dem Halbleitersubstrat (1) herstellt, wobei der Rahmen (5) durch das nachfolgende galvanische Abscheiden des elastischen Metalls (10) gebildet wird.

12. Verfahren zur Herstellung eines Mikroaktorbauteils nach Anspruch 10 oder 11,
**dadurch gekennzeichnet,**
**dass** als elastisches Metall (10) Nickel oder eine Nickellegierung abgeschieden wird.

## Claims

1. Micro actuator component, particularly for a micro mirror scanner, comprising a pivotable plate-shaped actuator element (13) that is disposed in a recess (2) of a supporting substrate (1), surrounded by an open or closed metal frame (5) on the surface of said supporting substrate (1) and suspended via one or several bending and/or torsion elements (4) on said supporting substrate (1),
wherein said one or several bending and/or torsion elements (4) are made of an elastic metal and fastened on said metal frame (5),
**characterised in**
**that** said actuator element (3) presents a lateral extension of at least 250 µm and said one or several bending and/or torsion elements (4) present a thickness of at least 7 µm and are widened at the junction to said actuator element (3) and/or said supporting substrate (1).

2. Micro actuator component according to Claim 1,
**characterised in**
**that** said actuator element (3) is a semiconductor chip.

3. Micro actuator component according to Claim 1 or 2,
**characterised in**
**that** said metal frame (5) has a wider internal periphery than said recess (2) of said supporting substrate, with said one or several bending and/or torsion elements (4) being fastened at a level above said supporting substrate (1) on said frame (5), at which they do not contact said supporting substrate (1).

4. Micro actuator component according to any of the Claims 1 to 3,
**characterised in**
**that** electrodes (18) are disposed on said supporting substrate (1) in the region of said recess at a vertical offset relative to said actuator element.

5. Micro actuator component according to any of the Claims 1 to 4,
**characterised in**
**that** said one or several bending and/or torsion elements (4) and/or said metal frame (5) are made of nickel or a nickel alloy.

6. Micro actuator component according to any of the Claims 2 to 5,
**characterised in**
**that** a rigidifying structure (15, 16, 20) is applied on said actuator element (3).

7. Micro actuator component according to Claim 6,
**characterised in**
**that** said rigidifying structure (20) is a hollow structure.

8. Micro actuator component according to Claim 6,
**characterised in**
**that** said rigidifying structure (15, 16) consists of one or several bar-shaped elements extending on the edge of said actuator element (3).

9. Micro actuator component according to Claim 8,
**characterised in**
**that** said bar-shaped elements are electrically conductive and are disposed on said actuator element in such an insulated manner, while being connected to said one or several bending and/or torsion elements (4), that the application of an electrical voltage to said bar-shaped elements via said one or several bending and/or torsion elements (4) causes a pivoting movement of said actuator element (3).

10. Method of manufacturing a micro actuator component, particularly a micro mirror suspended for pivoting movement, which comprises a plate-shaped actuator element (3) suspended via one or several bending and/or torsion elements (4) on a supporting substrate (1), comprising the following steps:
- providing a semiconductor substrate (1);
- creating a structured masking layer (7) on a face-side surface and a rear-side surface of said semiconductor substrate (1) for determining the lateral structure of said supporting substrate (1) and said actuator element (3);
- depositing a galvanic starter layer (8) over said structured masking layer (7);
- deposing a thick photo resist layer (9) in a thickness of at least 7 µm on said galvanic starter layer (8);
- structuring said photo resist layer (9) for defining at least the regions for said one or several bending and/or torsion elements (4);
- galvanic deposition of an elastic metal (10) for forming said one or several bending and/or torsion elements (4) in a thickness of at least 7 µm in said structured photo resist layer (9);
- removal of said photo resist material (9);
- removal of areas of said semiconductor substrate (1) by etching, which are not covered by said masking layer (7) from the face side and removal of a region of said semiconductor substrate (1) from the rear side for exposing said actuator element (3) and said one or several bending and/or torsion elements (4).

11. Method of manufacturing a micro actuator component according to Claim 10,
**characterised in**
**that** in said step of structuring said photo resist layer (9) the extension of an open or closed frame (5) is determined on said semiconductor substrate (1) as well, which encloses said actuator element and establishes the connection between said one or several bending and/or torsion elements (4) and said semiconductor substrate (1), with said frame (5) being formed by the subsequent galvanic deposition of said elastic metal (10).

12. Method of manufacturing a micro actuator component according to Claim 10 or 11,
**characterised in**
**that** nickel or a nickel alloy is deposited as said elastic metal (10).

## Revendications

1. Micro composant acteur, en particulier pour un micro balayeur à miroir, comprenant un élément acteur (13) pivotable sous forme de plaquette, qui est disposé dans un creux (2) d'un substrat porteur (1), entouré par un cadre métallique ouvert ou fermé (5) sur la surface dudit substrat porteur (1) et suspendu via un ou plusieurs éléments de flexion et/ou de torsion (4) sur ledit substrat porteur (1),
dans lequel lesdits un ou plusieurs éléments de flexion et/ou de torsion (4) sont produits en un métal élastique et fixés sur ledit cadre métallique (5),
**caractérisé en ce**
**que** ledit élément acteur (3) a une étendue latérale d'au moins 250 µm et lesdits un ou plusieurs éléments de flexion et/ou de torsion (4) ont une épaisseur d'au moins 7 µm et sont élargis à la jonction vers ledit élément acteur (3) et/ou audit substrat porteur (1).

2. Micro composant acteur selon la revendication 1,
**caractérisé en ce**
**que** ledit élément acteur (3) est une galette semi-conductrice.

3. Micro composant acteur selon la revendication 1 or 2,
**caractérisé en ce**
**que** ledit cadre métallique (5) a une périphérie intérieure plus large que ledit creux (2) dudit substrat porteur, auxdits un ou plusieurs éléments de flexion et/ou de torsion (4) étant fixés à un niveau au-dessus dudit substrat porteur (1) sur ledit cadre (5), auquel niveau ils ne touchent pas ledit substrat porteur (1).

4. Micro composant acteur une quelconque des revendications 1 à 3,
**caractérisé en ce**
**que** des électrodes (18) sont disposées sur ledit substrat porteur (1) dans la zone dudit creux à un déport vertical relatif audit élément acteur.

5. Micro composant acteur selon une quelconque des revendications 1 à 4,
**caractérisé en ce**
**que** lesdits un ou plusieurs éléments de flexion et/ou de torsion (4) et/ou ledit cadre métallique (5) sont faits en nickel ou en un alliage de nickel.

6. Micro composant acteur selon une quelconque des revendications 2 à 5,
**caractérisé en ce**
**qu'**une structure de renfort (15, 16, 20) est appliquée sur ledit élément acteur (3).

7. Micro composant acteur selon la revendication 6,
**caractérisé en ce**
**que** ladite structure de renfort (20) est une structure creuse.

8. Micro composant acteur selon la revendication 6,
**caractérisé en ce**
**que** ladite structure de renfort (15, 16) consiste en un ou plusieurs éléments sous forme de barre, qui s'étendent sur le bord dudit élément acteur (3).

9. Micro composant acteur selon la revendication 8,
**caractérisé en ce**
**que** lesdits éléments sous forme de barre sont des conducteurs électriques et sont disposés sur ledit élément acteur d'une manière isolée, en étant reliés auxdits un ou plusieurs éléments de flexion et/ou de torsion (4), telle que l'application d'une tension électrique auxdits éléments sous forme de barre via lesdits un ou plusieurs éléments de flexion et/ou de torsion (4) cause un mouvement pivotant dudit élément acteur (3).

10. Procédé de fabrication d'un composant micro acteur, en particulier d'un micro miroir suspendu pour un mouvement pivotant, qui comprend un élément acteur (3) sous forme de plaquette, qui est suspendu via un ou plusieurs éléments de flexion et/ou de torsion (4) sur un substrat porteur (1), comprenant les étapes suivantes:
- affecter un substrat semi-conducteur (1);
- créer une couche de masque structurée (7) sur une surface du côté de face et sur une surface du côté arrière dudit substrat semi-conducteur (1) afin de déterminer une structure latérale dudit substrat porteur (1) et dudit élément acteur (3);
- déposer une couche galvanique de départ (8) sur ladite couche de masque structurée (7);
- déposer une couche épaisse en laque photosensible (9) à une épaisseur d'au moins 7 µm sur ladite couche galvanique de départ (8);
- structurer ladite couche en laque photosensible (9) afin de définir au moins les zones pour lesdits un ou plusieurs éléments de flexion et/ou de torsion (4);
- dépôt galvanique d'un matériau élastique (10) afin de former lesdits un ou plusieurs éléments de flexion et/ou de torsion (4) à une épaisseur d'au moins 7 µm dans ladite couche structurée en laque photosensible (9);
- enlever ledit matériau de laque photosensible (9); enlever des aires dudit substrat semi-conducteur (1) par morsure, que ne sont pas recouvertes par ladite couche de masque (7), à partir du côté avant, et enlever une zone dudit substrat semi-conducteur (1) à partir du côté arrière afin d'exposer ledit élément acteur (3) et lesdits un ou plusieurs éléments de flexion et/ou de torsion (4).

11. Procédé de fabrication d'un composant micro acteur selon la revendication 10,
**caractérisé en ce**
**que** dans l'opération de structuration de ladite couche en laque photosensible (9), l'étendue d'un cadre ouvert ou fermé (5) est déterminé sur ledit substrat semi-conducteur (1) aussi, qui entoure ledit élément acteur et établit la connexion entre lesdits un ou plusieurs éléments de flexion et/ou de torsion (4) et ledit substrat semi-conducteur (1), ledit cadre (5) étant formé par le dépôt galvanique suivant dudit métal élastique (10).

12. Procédé de fabrication d'un composant micro acteur selon la revendication 10
ou 11,
**caractérisé en ce**
**que** du nickel ou un alliage de nickel est déposé en tant que ledit métal élastique (10).
